# EUROPEAN PATENT SPECIFICATION

(11) **EP 4 541 175 B1**
(45) Date of publication and mention of the grant of the patent: **08.07.2026**
(21) Application number: 23204710.0
(22) Date of filing: 19.10.2023
(51) Int. Cl.: A01D 41/12, A01D 75/20

(54) **MOVABLE SPREADER FRAME FOR A HARVESTER**
BEWEGLICHER STREURAHMEN FÜR EINE ERNTEMASCHINE
CADRE D'ÉPANDAGE MOBILE POUR UNE MOISSONNEUSE

(43) Date of publication of application: 23.04.2025
(73) Proprietor: CNH Industrial Belgium N.V., 8210 Zedelgem (BE)
(72) Inventor: Passchyn, Tim, 8210 Zedelgem (BE); Mommerency, Gilles, 8210 Zedelgem (BE); Desmet, Stefaan, 8210 Zedelgem (BE)
(74) Representative: CNH Industrial IP Department

(56) References cited:
- US-A1- 2005 192 070
- US-A1- 2009 088 231
- US-B2- 10 398 081

## Description

### TECHNICAL FIELD

The present invention relates to a frame for movably supporting a spreader device at a rear end of an agricultural vehicle, as well as to an agricultural vehicle having such a frame installed.

### BACKGROUND

Modern agricultural vehicles, such as combine harvesters, are large and complex driving machines with many mechanical parts, control electronics, and hydraulic circuits, packed together in a tight space to achieve maximum yields with a relatively compact vehicle. The compactness of these modern agricultural vehicles may, however, make it more difficult to inspect, repair, and replace the various parts of the vehicle during maintenance operations. To improve access to some of those parts, some other parts and functional units of the agricultural vehicle may be movable between an operational configuration and a maintenance configuration.

For example, the straw spreaders of a combine harvester may be mounted to a rear end of the harvester via a frame that is pivotably connected to the housing of the straw chopper. When in use, the frame is pivoted down to suspend the straw spreaders directly below the outlet of the straw chopper. For maintenance purposes, the frame may be pivoted upward to move the straw spreaders up and rearward to a position that is primarily behind the straw chopper. In this maintenance configuration, it may firstly be easier to access specific parts of the straw spreaders. More importantly, moving the straw spreaders away from their operational configuration allows an operator to properly inspect and get access to other parts, such as the upper and lower sieves of the cleaning section of the combine harvester.

The pivoting of the frame may be controlled by hand or by one or more actuators. When the heavy straw spreaders are up in the maintenance configuration it is essential that they do not fall down and injure the operator or any other person. Different safety features have been proposed to ensure that the straw spreaders are kept in the maintenance configuration. For example, if an actuator is used for raising and lower the straw spreaders, the actuator may be mechanically and/or hydraulically locked to prevent the frame from pivoting. Alternatively, the operator may need to pull a handle or insert a pin to prevent relative movement between the frame and the housing of the straw chopper. However, electronic and hydraulic solutions may have a risk of system failure and manual mechanical solutions carry a risk of human error.

US 2005/192070 A1 discloses a frame with a pair of side arms configured to support the spreader and being connected to a rear end of a harvester through pivoting connections. The frame also includes a safety latch for preventing pivoting movement of the frame relative to the rear end of the harvester.

Further frames are known from US 2009/088231 A1 and US 10 398 081 B2.

It is an aim of the present invention to address one or more disadvantages associated with the prior art.

### SUMMARY OF THE INVENTION

According to the invention there is provided a frame for movably supporting a spreader device at a rear end of an agricultural vehicle. The frame comprises two side arms configured to support the spreader device therebetween. Two pivot connections are arranged at respective ones of the two side arms and configured to pivotably connect the frame to the rear end of the agricultural vehicle. At least a first safety arm extends from a first one of the side arms, with an elongated safety latch pivotably connected to the first safety arm. The elongated safety latch comprises an engagement feature that is configured to engage with a complementary engagement feature laterally extending from the rear end of the agricultural vehicle to temporarily block the frame from pivoting relative to the rear end of the agricultural vehicle in at least one pivoting direction. The elongated safety latch further comprises a contact edge that is arranged to get into a sliding contact with the complementary engagement feature during a portion of an upward pivoting motion of the frame, wherein the sliding contact causes the elongated safety latch to pivot relative to the first safety arm and the engagement feature to engage with the complementary engagement feature.

The support frame with this special elongated safety latch provides a purely mechanical and fail-proof safety lock for ensuring that the spreader device remains in its lifted maintenance configuration when it needs to. Because the engagement of the safety latch with the complementary engagement feature at the vehicle is caused by the pivoting motion of the frame and the sliding contact of the safety latch with that complementary engagement feature, no separate action of the operator is needed to engage the safety lock. This simplifies the operator's tasks and further increases the safety by reducing the possibility of failure and injury due to human error.

In embodiments of the invention, the elongated safety latch is pivotably connected to the first safety arm at a first end of the elongated safety latch. The engagement feature of the elongated safety latch may be provided at a free end of the elongated safety latch. Alternatively, the elongated safety latch may partially extend beyond the pivot point and/or the engagement feature, for example to influence and control the pivoting dynamics of the safety latch during movement of the frame.

Advantageously, the frame further comprises a pointer, coupled to the elongated safety latch for rotation therewith, and wherein the safety arm comprises an indicator with at least a first region and a second region. The first region is arranged such that the pointer points towards the first region when the engagement feature of the elongated safety latch engages the complementary engagement feature. The second region is arranged such that the pointer points towards a second region of the indicator, separate from the first region, when the engagement feature of the elongated safety latch does not engage the complementary engagement feature extending from the rear end of the agricultural vehicle. The pointer only points to the first region when the frame and spreader device are safely locked into the maintenance configuration. With this pointer and indicator, an operator can thus immediately see when it is safe to crawl under the chopper housing and inspect the cleaning sieves.

The indicator may further be arranged relative to the pointer such that the pointer points to different regions of the indicator depending on whether the spreader device is positioned above or below its maintenance configuration. For example, the pointer points towards the second region, while the frame is pivoted upwards and before the engagement feature of the elongated safety latch engages the complementary engagement feature at the vehicle. In this embodiment, the pointer points towards a third region, separate from the first and second regions, when the frame continues pivoting upwards beyond that point, i.e. after the engagement feature of the elongated safety latch has disengaged from the complementary engagement feature at the vehicle.

The elongated safety latch and the pointer are typically provided at opposing faces of the first safety arm and interconnected via a pivot axle extending through the first safety arm. While the safety latch is preferably provided at the inside of the safety arm, i.e. between the safety arm and the vehicle during use, the pointer is preferably provided at the outside of the safety arm where it is most easily observed by a user.

For an even distribution of forces over the full width of the frame, the frame may further comprise a second safety arm and a second elongated safety latch. The second safety arm extends from a second one of the side arms and the second elongated safety latch is pivotably connected to the second safety arm. Like the first safety latch, the second safety latch comprises an engagement feature that is configured to engage with a second complementary engagement feature laterally extending from the rear end of the agricultural vehicle. The second elongated safety latch also comprises a contact edge that is arranged to get into a sliding contact with the second complementary engagement feature during a portion of an upward pivoting motion of the frame, wherein the sliding contact causes the second elongated safety latch to pivot relative to the second safety arm and its engagement feature to engage with the second complementary engagement feature.

According to an embodiment of the invention an agricultural vehicle, e.g. a combine harvester, is provided comprising a spreader device and a frame in accordance with the present invention, movably supporting the spreader device at a rear end of the agricultural vehicle. The spreader device may, e.g., be straw spreader, a chaff spreader, or a combined straw and chaff spreader. An actuator may be coupled between the frame and the rear end of the agricultural vehicle for raising and lowering the spreader device by pivoting the frame. The actuator may, for example, be an electric actuator or a hydraulic actuator. While the actuator may be controlled by an electronic signal triggered by a user or some vehicle control software, the purely mechanical safety latch will be automatically engaged when the spreader device is lifted to its maintenance configuration.

### BRIEF DESCRIPTION OF THE DRAWINGS

Embodiments of the invention will now be described by way of example with reference to the accompanying drawings, in which:
Figure 1 schematically shows a combine harvester wherein the invention may be advantageously used; and
Figure 2 shows a side view of a chopper housing and a frame supporting a spreader device pivotably mounted thereto;
Figure 3 shows a side view of the spreader device of Figure 3, lifted into a maintenance configuration;
Figure 4 shows a perspective and semi-transparent view of the frame of Figures 2 and 3;
Figure 5 shows an exemplary elongated safety latch as may be used in the frame of Figures 2 to 4;
Figures 6a to 6f show close-ups of the frame of Figures 2 to 4 in six different orientations relative to the combine harvester; and
Figure 7a to 7c show close-ups of part of a safety arm with a frame configuration indicator and the frame in three different orientations relative to the combine harvester.

### DETAILED DESCRIPTION

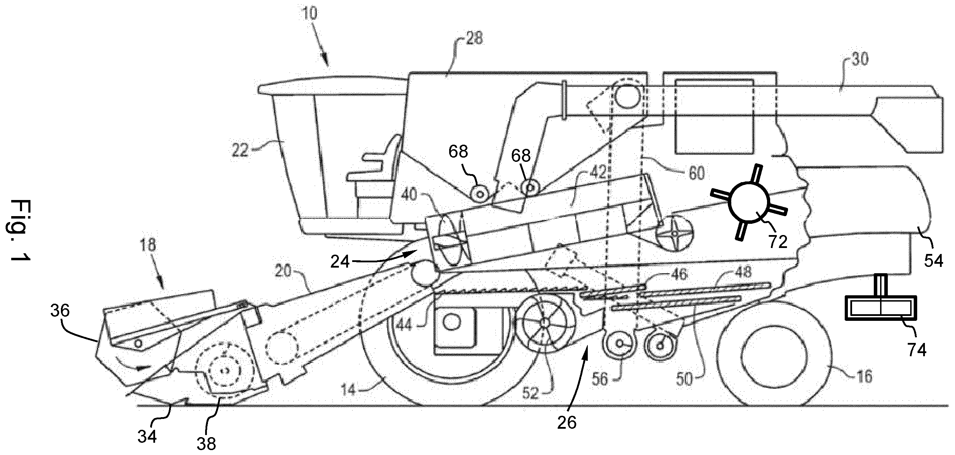

Figure 1 schematically shows an agricultural vehicle in the form of a combine harvester 10. The combine harvester 10 generally includes front and rear round engaging wheels 14, 16, a header 18, a feeder 20, an operator cabin 22, a threshing and separation system 24, a cleaning system 26, a grain tank 28 and an unloading tube 30.

A header 18 is mounted to the front of the combine harvester 10 and includes a cutter bar 34 for severing crops from a field during forward motion of the combine. A rotatable reel 36 feeds the crop into the header 18, and a double auger 38 feeds the severed crop laterally from each side towards the feeder 20. The feeder 20 conveys the severed crop to the threshing and separation system 24.

The threshing and separation system 24 is of the axial-flow type and comprises a threshing rotor 40 at least partially located and rotatable within a threshing concave 42. The threshing concave may take the form of a perforated concave. Grain from the severed crop is threshed and separated from the material other than grain (MOG) by the action of the threshing rotor 40 within the threshing concave 42. Larger elements of MOG, such as stalks and leaves do not pass through the perforations in the threshing concave 42 and are discharged from the rear of the combine harvester 10.

The release of straw residue behind the combine harvester 10 may be done by dropping the straw in a swath on the field, for example to allow it being picked up by a baler machine later. Often, however, the straw residue is chopped into smaller pieces by a chopper 72 and spread over the field across the full width of the header 18 by a spreader system 74. The spreader system 74 typically comprises a left and a right rotary spreader, each spreading the chopped crop residue received from the chopper 72 laterally and away from the combine harvester 10. The chaff and other small MOG coming from the cleaning system 26 may be dropped on the field, spread over the field by a separate chaff spreader (not shown), or mixed in with the straw residue to be spread together therewith by the spreader system 74. The straw, chaff, and other MOG that is spread over the field serves as fertilizer for the soil.

Grain and smaller elements of MOG (small MOG henceforth), such as chaff, dust and straw are small enough to pass through the perforations in the threshing concave 42. Grain and small MOG that has successfully passed the threshing and separation system 24 falls onto a preparation pan 44 and is conveyed towards the cleaning system 26. The cleaning system comprises a series of sieves and a cleaning fan 52. The series of sieves includes a pre-cleaning sieve 46, an upper (or chaffer) sieve 48 and a lower (or shoe) sieve 50. The cleaning fan 52 generates an airflow through the sieves 46, 48, 50 that impinges on the grain and small MOG thereon. The small MOG is typically lighter than the grain and is therefore separated from the grain as it becomes airborne. The small MOG is subsequently discharged from the combine harvester 10 via a straw hood 54.

The preparation pan 44 and pre-cleaning sieve 46 oscillate in a fore-to-aft manner to transport the grain and small MOG to the upper surface of the upper sieve 48. The upper sieve 48 is arranged vertically above the lower sieve 50 and oscillates in a for-to-aft manner too, such that the grain and small MOG are spread across the two sieves 48, 50, while also permitting cleaned grain to pass through openings in the sieves 48, 50 under the action of gravity.

Cleaned grain falls to a clean grain auger 56 that is positioned below and in front of the lower sieve 50 and spans the width of the combine harvester 10. The clean grain auger 56 conveys the cleaned grain laterally to a vertical grain elevator 60, which is arranged to transport the cleaned grain to the grain tank 28. Once in the grain tank 28, grain tank augers 68 at the bottom of the grain tank convey the cleaned grain laterally within the grain tank 28 to an unloading tube 30 for discharge from the combine harvester 10.

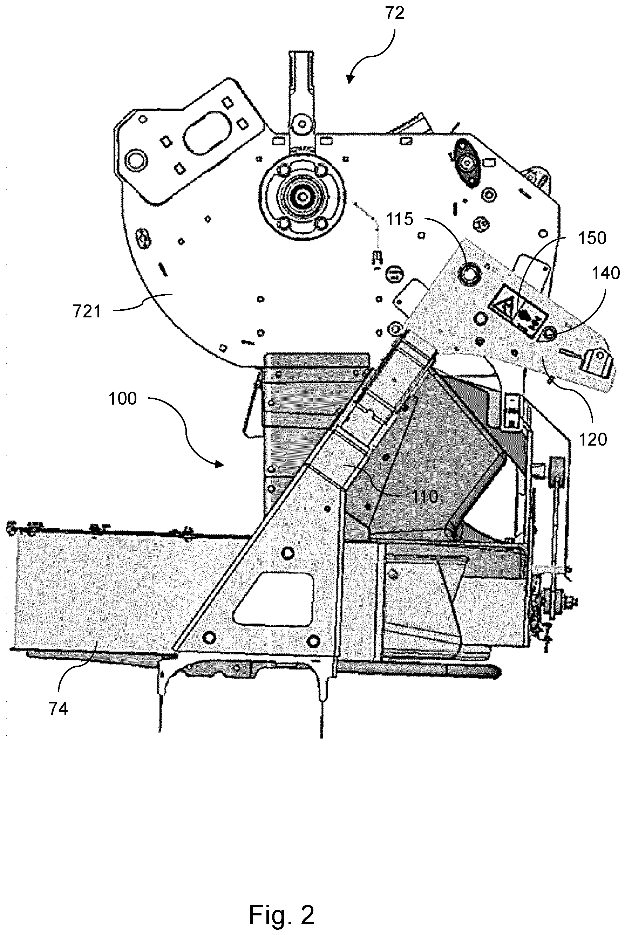

Figure 2 shows a side view of a chopper housing 721 and a frame 100 supporting a spreader device 74 pivotably mounted thereto. While the frame 100 is intended for use at the rear end of a combine harvester 10 to support a straw and/or chaff spreader, it can be used in the same way at a front or middle section of an agricultural vehicle and/or carry any other type of functional unit that is pivotably movable between an operational configuration and a maintenance configuration. In addition to spreading, the straw and/or chaff spreader may provide for additional functionality, such as crushing weed seeds, or chopping straw.

In Figure 2, the spreader device 74 is positioned in its operational configuration, just below the straw chopper 72. The frame 100 comprises two side arms 110, pivotably connected at either side of the housing 721 of a straw chopper 72 via pivot connections 115. In this side view, only the left side arm 110 is shown. The side arms 110 extend from the pivot connections 115. Left and right straw spreaders 74 are mounted between the free ends of the side arms 110.

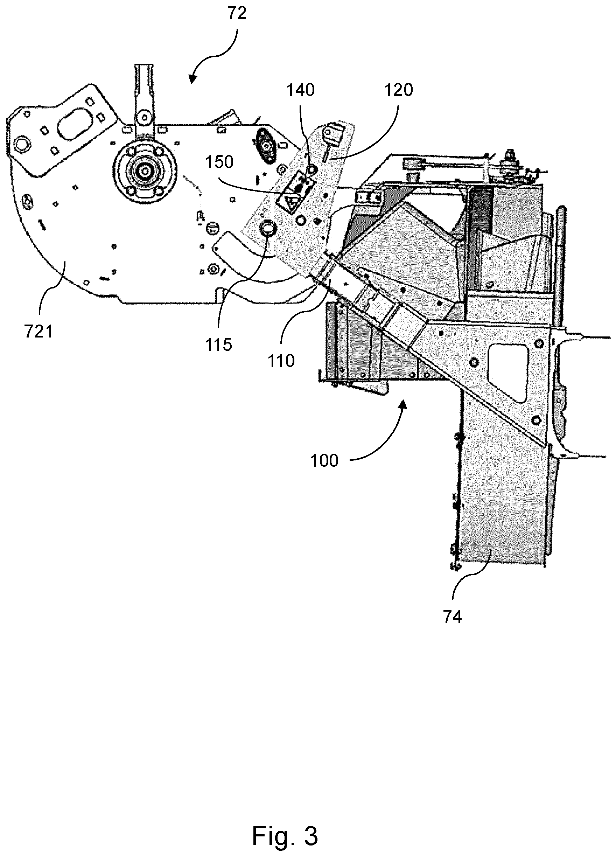

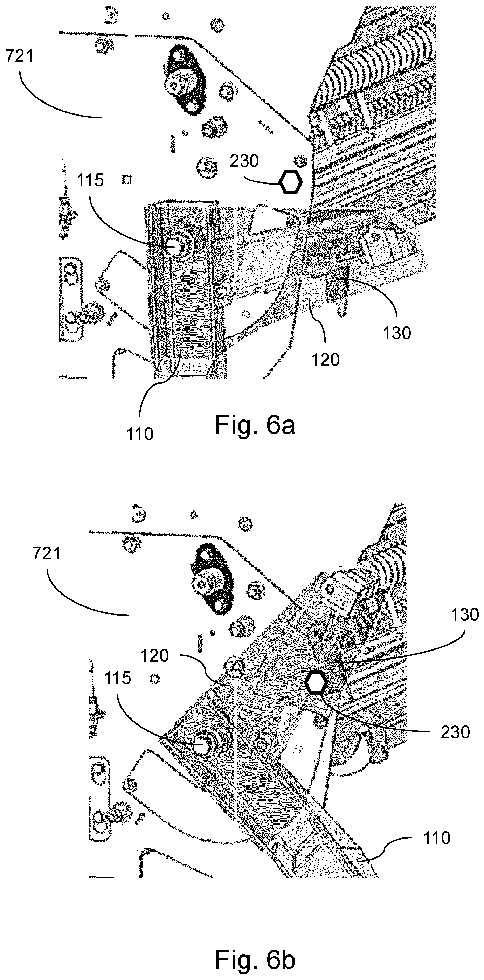

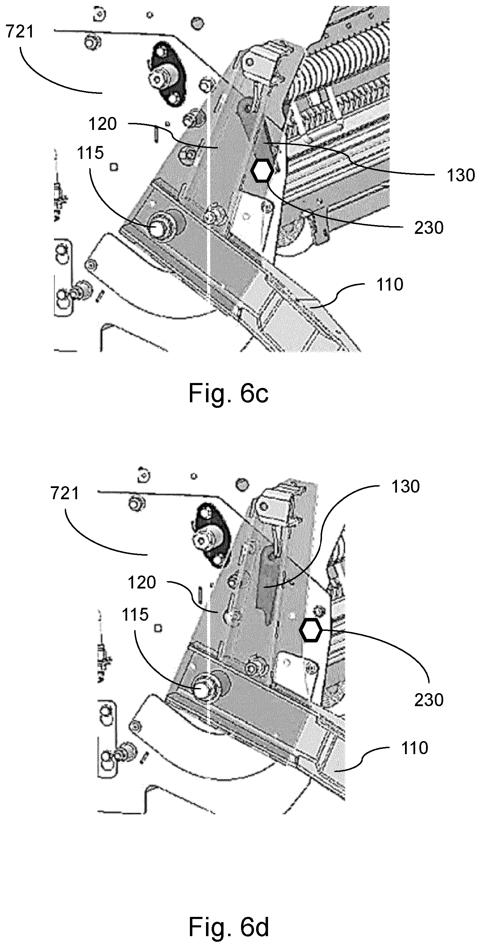

Extending from at least one of the side arms 110 is a safety arm 120 that is designed to lock the frame 100 in the maintenance configuration that can be observed in Figure 3. When locked in this maintenance configuration, the frame 100 is prevented from involuntarily pivoting clockwise because of the weight of the straw spreaders 74. As will be described in more detail below with reference to Figures 6a to 6f, the only way to lower the spreader device 74 for bringing it back to the operational configuration shown in Figure 2 then is to first raise the spreader device 74 a bit further, i.e. rotate the frame counter clockwise beyond the maintenance configuration shown in Figure 3, before lowering it all the way down to its operational configuration.

In this embodiment, the safety arm 120 extend from the side arm 110 under an approximately perpendicular angle. In other embodiments, this angle may be different. While preferred embodiments of the frame 100 will have two safety arms 120, one extending from each side arm 110, a single safety arm 120 can be enough to reliably lock the frame 100 in the maintenance configuration. An important advantage of using two safety arms 120 is that it provides a better distribution of the forces acting on the pivot connections 115. Another important advantage is that the built-in redundancy results in an even safer locking system.

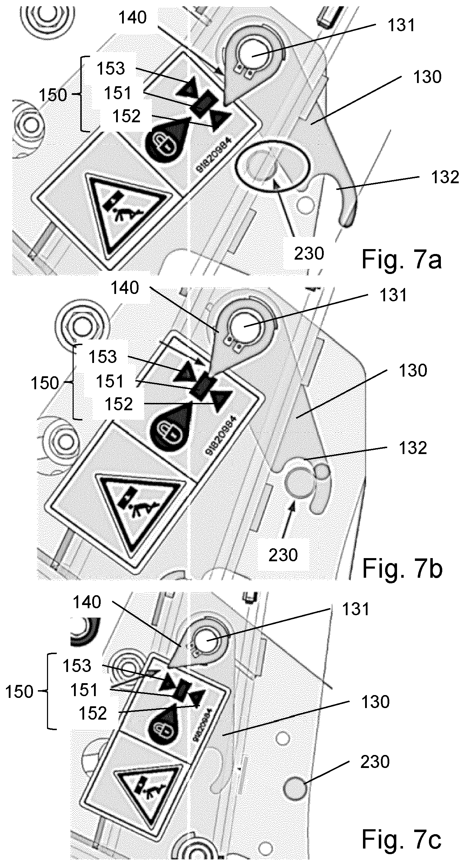

Already visible in Figures 2 and 3 are the pointer 140 and indicator 150 provided on the visible outer surface of the safety arm 120. As will be described in more detail below with reference to Figures 7a to 7c, this pointer 140 and indicator 150 serve to clearly indicate to an operator when it is safe to crawl under the chopper housing 721 and inspect the cleaning sieves 46, 48, 50 of the cleaning system 26.

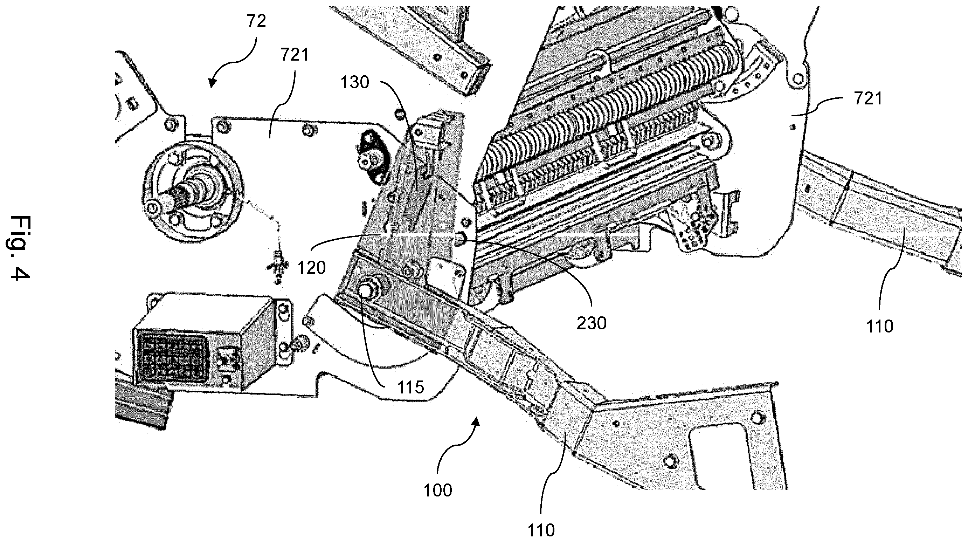

Figure 4 shows a perspective and semi-transparent view of the frame 100 of Figures 2 and 3. In addition to the features already visible in Figures 2 and 3, Figure 4 shows the elongated safety latch 130 that is pivotably attached to the inside of the safety arm 120, i.e. between the safety arm 120 and the chopper housing 721. Figure 4 further shows the complementary engagement feature 230 that is mounted to the chopper housing 721. In other embodiments, the complementary engagement feature 230 is to other stationary parts of the combine harvester 10 or of the combine harvester chassis. In this figure, the frame 100 is shown in a fully lifted position, wherein it has been pivoted upwards beyond its position when in the maintenance configuration. As will be described in more detail below with reference to Figures 6a to 6f, the frame 100 can be pivoted down from this position all the way to the operational configuration wherein the straw spreaders 74 are positioned below the chopper 72 without the engagement feature of the safety latch 130 engaging the complementary engagement feature 230 on the chopper housing 721.

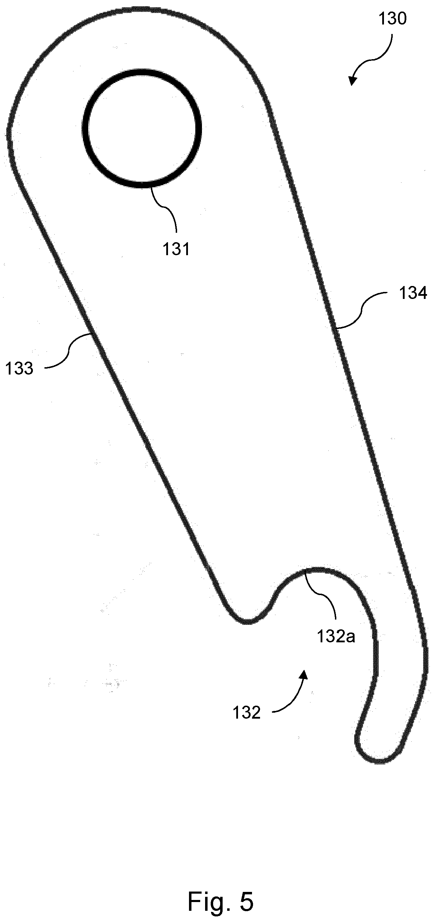

Figure 5 shows an exemplary elongated safety latch 130 as may be used in the frame of Figures 2 to 4. The safety latch comprises a pivot connector 131 for pivotably mounting the safety latch to the chopper housing 721 or to some other stationary part of the combine harvester 10 or of the combine harvester chassis. Ideally, the pivotal connection between the safety latch 130 and the chopper housing has very low friction, such that the safety latch 130 is free to make pendulum-like movements when moved out of equilibrium. The pivot connector 131 may, for example, just be a circular opening that is to be slid over a circular axle provided at the chopper housing 721. The pivot connector 131 may comprise bearings for ensuring low friction pendular motion of the safety latch. Alternatively, bearings may be provided at the chassis side of the pivot connection. In this example, the pivot connector 131 is provided at the outer end of the safety latch 130, but it may alternatively be located closer to the centre of the safety latch 130. The exact position of the pivot connector 131 may be decided on, taking into consideration the effect this will have on the structural strength and the dynamic behaviour of the safety latch 130.

The safety latch 130 further comprises an engagement feature 132, designed to engage with the complementary engagement feature 230 on the chopper housing 721. In this example, the engagement feature 132 is shaped as a hook with a wide opening for capturing the complementary engagement feature 230 and a semi-circular bottom edge 132a to partially wrap around the complementary engagement feature 230 when the frame 100 is locked in the maintenance configuration. A contact edge 133 extends between the pivot connector 131 and the engagement feature 123 for sliding along the complementary engagement feature 230 while the frame 100 is pivoted towards the maintenance configuration, until the engagement feature 132 falls over the complementary engagement feature 230 and engages therewith to temporarily lock the frame 100 in its maintenance configuration. Opposite the contact edge 133, and generally (but in this case not completely) parallel therewith, the safety latch 130 comprises a rear edge 134 that provides a similar guiding function during when the frame 100 is brought back to the operation configuration.

The engagement and disengagement of the safety latch 130 will now be described in more detail with reference to Figures 6a to 6f, which show close-ups of the frame 100 of Figures 2 to 4 in six different orientations relative to the combine harvester 10. In Figure 6a, the frame 100 is in its operational configuration, with the spreaders (out of view) located below the straw chopper 72. The side arms 110 are approximately vertically oriented and the safety arms 120 horizontally. Gravity makes the freely pivoting safety latch 130 hang vertically with its engagement feature 132 pointing to the ground and far away from the complementary engagement feature 230 on the chopper housing 721.

From there the frame is pivoted upward, i.e. in the counter clockwise direction when viewed from the left side of the combine harvester 10. The pivoting may be caused by an operator manually lifting the spreader device 74, but is preferably effected or assisted by one or more electric or hydraulic actuators. During the first portion of the pivoting movement of the frame 100, the safety latch 130 moves closer to the complementary engagement feature 230. At some point, as shown in figure 6b, the contact edge 133 of the safety latch contacts the complementary engagement feature 230 and starts sliding along this complementary engagement feature 230, thereby causing the safety latch 130 to pivot counter clockwise relative to the safety arm 120.

When the frame 100 pivots a bit further, the engagement feature 132 of the safety latch 130 falls over the complementary engagement feature 230 at the chopper housing 721 and engages therewith to temporarily lock the frame 100 in its maintenance configuration. In this position, the frame 100 is prevented from pivoting clockwise by the safety latch 130 that leans on the complementary engagement feature 230. Consequently, the safety mechanism does not need to rely on, e.g., a safety pin or safety valve in the actuator, or a safety pin that need to be manually inserted by the operator. The safety lock presented herein is activated automatically and in a purely mechanical manner.

Because the frame 100 is prevented from pivoting clockwise, the only possible way for the frame 100 to move is to resume the counter clockwise rotation and to lift the spreader device 74 a bit further. As can be seen in Figure 6d, this will cause the safety latch 130 to disengage from the complementary engagement feature 230 and to pivot freely as it did in Figure 6a.

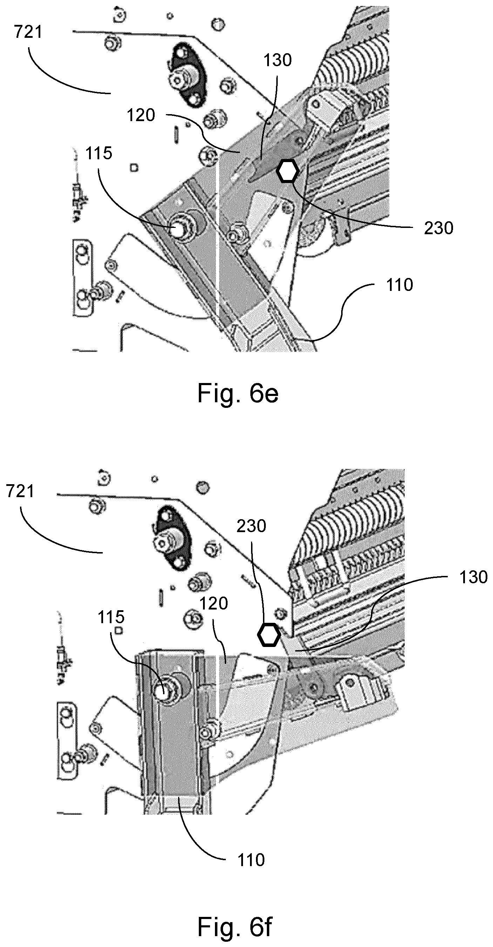

As soon as the safety latch 130 is released, the frame 100 can start pivoting in the clockwise direction. Preferably, one or more actuators actively provide some counter pressure to avoid the frame 100 and spreader device 74 coming down too quickly. In the first part of the counter clockwise pivoting motion of the frame 100, the safety latch 130 reapproaches the complementary engagement feature 230, until the rear edge 134 of the safety latch 130 contacts the complementary engagement feature 230 as shown in Figure 6e.

From that point of contact, the safety latch 130 starts rotating relative to the safety arm 120 in the clockwise direction while the rear edge 134 slides over the complementary engagement feature 230. When the end tip of the rear edge 134 of the safety latch 130 loses contact with the complementary engagement feature 230, as is about to happen in the situation shown in Figure 6f, the safety latch 230 will pivot freely again as in the situation shown in Figure 6a. From there, the frame 100 can move on and return to the operational configuration with the spreader device 74 below the chopper 72.

Figure 7a to 7c show close-ups of part of a safety arm 120 with a frame configuration indicator 150 and the frame 100 in three different orientations relative to the combine harvester 10. It is noted that the safety arm 120 is shown as being semi-transparent to allow showing the safety latch 130, which is at least partly positioned behind the safety arm 120. The indicator 150 comprises a first region 151, in this case presented as a rectangle, and second and third regions 152, 153, presented as triangles pointing towards the first region and each other. Other geometric shapes or images may be used for indicating the three separate regions 151, 152, 153. Alternatively, a more gradual transition between the three regions 151, 152, 153 may be used. For example the first region 151 may be green and the second and third region 152, 153 red, with a gradual change of colour between adjacent regions 151, 152, 153.

A pointer 140 is attached to, or forms part of, the safety latch 130. When the safety latch rotates relative to the safety arm 120, a tip of the pointer 140 rotates together with the safety latch 130. As a result, the pointer 140 points to different regions of the indicator 150 depending on the orientation of the safety latch 130 relative to the safety arm 120. As explained above, in particular with reference to Figures 6a to 6f, this orientation depends on the position of the frame 100, relative to the rear end of the combine harvester 10.

As shown in Figure 7b, the pointer 140 points to the first region 151 when the engagement feature 132 of the safety latch 130 is engaged with the complementary engagement feature 230 at the chopper housing 721 and the frame 100 is safely locked in the maintenance configuration. When the pointer 140 points to this first region 151, this indicates that it would be safe for an operator to move below the straw chopper 72 and inspect the sieves 46, 48, 50 of the cleaning system 26.

Figure 7a shows the frame 100 being pivoted upwards, and before the maintenance configuration is reached. In that situation, the pointer 140 points to the second region 152. Figure 7c shows the pointer 140 pointing to the third region after the safety latch 130 has been disengaged and there is a risk of the frame 100 coming down. With an indicator 150 as shown in Figures 7a to 7c, the safety latch 130 does not only ensure the safe locking of the frame 100 when moved into the safety configuration, but further allows the operator to easily see when it is and when it is not safe to move under the straw spreaders 74.

As an alternative for, or in addition to the pointer 140 that provides a visual indication of the position of the safety latch 130, a sensor may be installed to verify the position of the safety latch. For example, an inductive sensor, a Hall sensor, or an optical sensor may be used for this purpose. This sensor may be coupled to a controller that generates an audible or visual signal for indicating to the operator that the frame 100 is safely locked in the maintenance configuration. A separate, possibly different, signal may be provided when the frame 100 has been properly returned to its operational configuration. The operation of the harvester 10 or parts of the harvester 10 may be conditional upon the sensor indicating a safe return to the operational position.

## Claims

1. A frame (100) for movably supporting a spreader device (74) at a rear end of an agricultural vehicle (10), the frame (100) comprising:
two side arms (110) configured to support the spreader device (74) therebetween;
two pivot connections (115), arranged at respective ones of the two side arms (110) and configured to pivotably connect the frame (100) to the rear end of the agricultural vehicle (10);
at least a first safety arm (120), extending from a first one of the side arms (110); and
an elongated safety latch (130), pivotably connected to the first safety arm (120), and comprising an engagement feature (132) that is configured to engage with a complementary engagement feature (230) laterally extending from the rear end of the agricultural vehicle (10) to temporarily block the frame (100) from pivoting relative to the rear end of the agricultural vehicle (10) in at least one pivoting direction, the frame (100) being **characterised in that** the elongated safety latch (130) further comprises a contact edge (133) that is arranged to get into a sliding contact with the complementary engagement feature (230) during a portion of an upward pivoting motion of the frame (100), wherein the sliding contact causes the elongated safety latch (130) to pivot relative to the first safety arm (120) and the engagement feature (132) to engage with the complementary engagement feature (230).

2. A frame (100) as claimed in claim 1, wherein the elongated safety latch (130) is pivotably connected to the first safety arm (120) at a first end of the elongated safety latch (130).

3. A frame (100) as claimed in claim 1 or 2, wherein the engagement feature (132) of the elongated safety latch (130) is provided at a free end of the elongated safety latch (130).

4. A frame (100) as claimed in any of claims 1 to 3, further comprising a pointer (140), coupled to the elongated safety latch (130) for rotation therewith, and wherein the safety arm (120) comprises an indicator (150), arranged relative to the pointer (140) such that:
the pointer (140) points towards a first region (151) of the indicator (150) when the engagement feature (132) of the elongated safety latch (130) engages the complementary engagement feature (230) extending from the rear end of the agricultural vehicle (10); and
the pointer (140) points towards a second region (152) of the indicator (150), separate from the first region (151), when the engagement feature (132) of the elongated safety latch (130) does not engage the complementary engagement feature (230) extending from the rear end of the agricultural vehicle (10).

5. A frame (100) as claimed in claim 4, wherein the indicator (150) is further arranged relative to the pointer (140) such that, while the frame (100) is pivoted upwards:
the pointer (140) points towards the second region (152), before the engagement feature (132) of the elongated safety latch (130) engages the complementary engagement feature (230) extending from the rear end of the agricultural vehicle (10); and
the pointer (140) points towards a third region (153), separate from the first and second region (152)s, after the engagement feature (132) of the elongated safety latch (130) has disengaged from the complementary engagement feature (230) extending from the rear end of the agricultural vehicle (10).

6. A frame (100) as claimed in claim 4 or 5, wherein the elongated safety latch (130) and the pointer (140) are provided at opposing faces of the first safety arm (120) and interconnected via a pivot axle extending through the first safety arm (120).

7. A frame (100) as claimed in any of the preceding claims, further comprising:
a second safety arm (120), extending from a second one of the side arms (110); and
a second elongated safety latch (130), pivotably connected to the second safety arm (120), and comprising an engagement feature (132), configured to engage with a second complementary engagement feature (230) laterally extending from the rear end of the agricultural vehicle (10) to temporarily block the frame (100) from pivoting relative to the rear end of the agricultural vehicle (10) in the at least one pivoting direction, the second elongated safety latch (130) further comprising a contact edge (133) that is arranged to get into a sliding contact with the second complementary engagement feature (230) during a portion of an upward pivoting motion of the frame (100), wherein this sliding contact causes the second elongated safety latch (130) to pivot relative to the second safety arm (120) and its engagement feature (132) to engage with the second complementary engagement feature (230).

8. An agricultural vehicle (10) comprising a spreader device (74) and a frame (100) as claimed in any of the preceding claims.

## Patentansprüche

1. Rahmen (100) zur beweglichen Abstützung einer Streuvorrichtung (74) an einem hinteren Ende eines landwirtschaftlichen Fahrzeugs (10), wobei der Rahmen (100) umfasst:
zwei Seitenarme (110), die konfiguriert sind, um die Streuvorrichtung (74) dazwischen zu stützen;
zwei Schwenkverbindungen (115), die an jeweiligen der zwei Seitenarme (110) angeordnet und konfiguriert sind, um den Rahmen (100) schwenkbar mit dem hinteren Ende des landwirtschaftlichen Fahrzeugs (10) zu verbinden;
mindestens einen ersten Sicherheitsarm (120), der sich von einem ersten der Seitenarme (110) aus erstreckt; und
eine längliche Sicherheitsverriegelung (130), die schwenkbar mit dem ersten Sicherheitsarm (120) verbunden ist und ein Eingriffsmerkmal (132) umfasst, das konfiguriert ist, um mit einem komplementären Eingriffsmerkmal (230), das sich seitlich vom hinteren Ende des landwirtschaftlichen Fahrzeugs (10) aus erstreckt, in Eingriff zu kommen, um vorübergehend zu blockieren, dass der Rahmen (100) relativ zum hinteren Ende des landwirtschaftlichen Fahrzeugs (10) in mindestens einer Schwenkrichtung schwenkt, wobei der Rahmen (100) **dadurch gekennzeichnet ist, dass** die längliche Sicherheitsverriegelung (130) ferner eine Kontaktkante (133) umfasst, die dazu angeordnet ist, während eines Abschnitts einer Aufwärtsschwenkbewegung des Rahmens (100) in einen gleitenden Kontakt mit dem komplementären Eingriffsmerkmal (230) zu gelangen, wobei der gleitende Kontakt bewirkt, dass die längliche Sicherheitsverriegelung (130) relativ zum ersten Sicherheitsarm (120) schwenkt und das Eingriffsmerkmal (132) mit dem komplementären Eingriffsmerkmal (230) in Eingriff kommt.

2. Rahmen (100) nach Anspruch 1, wobei die längliche Sicherheitsverriegelung (130) schwenkbar mit dem ersten Sicherheitsarm (120) an einem ersten Ende der länglichen Sicherheitsverriegelung (130) verbunden ist.

3. Rahmen (100) nach Anspruch 1 oder 2, wobei das Eingriffsmerkmal (132) der länglichen Sicherheitsverriegelung (130) an einem freien Ende der länglichen Sicherheitsverriegelung (130) vorgesehen ist.

4. Rahmen (100) nach einem der Ansprüche 1 bis 3, ferner umfassend einen Zeiger (140), der mit der länglichen Sicherheitsverriegelung (130) zur gemeinsamen Drehung gekoppelt ist, und wobei der Sicherheitsarm (120) einen Indikator (150) umfasst, der relativ zu dem Zeiger (140) derart angeordnet ist, dass:
der Zeiger (140) auf einen ersten Bereich (151) des Indikators (150) zeigt, wenn das Eingriffsmerkmal (132) der länglichen Sicherheitsverriegelung (130) in das komplementäre Eingriffsmerkmal (230) eingreift, das sich vom hinteren Ende des landwirtschaftlichen Fahrzeugs (10) aus erstreckt; und
der Zeiger (140) auf einen zweiten Bereich (152) des Indikators (150) zeigt, der von dem ersten Bereich (151) getrennt ist, wenn das Eingriffsmerkmal (132) der länglichen Sicherheitsverriegelung (130) nicht in das komplementäre Eingriffsmerkmal (230) eingreift, das sich von dem hinteren Ende des landwirtschaftlichen Fahrzeugs (10) aus erstreckt.

5. Rahmen (100) nach Anspruch 4, wobei der Indikator (150) ferner relativ zu dem Zeiger (140) derart angeordnet ist, dass, während der Rahmen (100) nach oben geschwenkt wird:
der Zeiger (140) in Richtung des zweiten Bereichs (152) zeigt, bevor das Eingriffsmerkmal (132) der länglichen Sicherheitsverriegelung (130) in das komplementäre Eingriffsmerkmal (230) eingreift, das sich vom hinteren Ende des landwirtschaftlichen Fahrzeugs (10) aus erstreckt; und
der Zeiger (140) in Richtung eines dritten Bereichs (153) zeigt, der von dem ersten und zweiten Bereich (152) getrennt ist, nachdem das Eingriffsmerkmal (132) der länglichen Sicherheitsverriegelung (130) von dem komplementären Eingriffsmerkmal (230), das sich von dem hinteren Ende des landwirtschaftlichen Fahrzeugs (10) aus erstreckt, außer Eingriff gelangt ist.

6. Rahmen (100) nach Anspruch 4 oder 5, wobei die längliche Sicherheitsverriegelung (130) und der Zeiger (140) an gegenüberliegenden Flächen des ersten Sicherheitsarms (120) bereitgestellt und über eine Schwenkachse miteinander verbunden sind, die sich durch den ersten Sicherheitsarm (120) erstreckt.

7. Rahmen (100) nach einem der vorstehenden Ansprüche, ferner umfassend:
einen zweiten Sicherheitsarm (120), der sich von einem zweiten der Seitenarme (110) aus erstreckt; und
eine zweite längliche Sicherheitsverriegelung (130), die schwenkbar mit dem zweiten Sicherheitsarm (120) verbunden ist und ein Eingriffsmerkmal (132) umfasst, das konfiguriert ist, um mit einem zweiten komplementären Eingriffsmerkmal (230), das sich seitlich vom hinteren Ende des landwirtschaftlichen Fahrzeugs (10) aus erstreckt, in Eingriff zu kommen, um vorübergehend zu blockieren, dass der Rahmen (100) relativ zum hinteren Ende des landwirtschaftlichen Fahrzeugs (10) in der mindestens einen Schwenkrichtung schwenkt, wobei die zweite längliche Sicherheitsverriegelung (130) ferner eine Kontaktkante (133) umfasst, die dazu angeordnet ist, während eines Abschnitts einer Aufwärtsschwenkbewegung des Rahmens (100) in gleitenden Kontakt mit dem zweiten komplementären Eingriffsmerkmal (230) zu gelangen, wobei dieser gleitende Kontakt bewirkt, dass die zweite längliche Sicherheitsverriegelung (130) relativ zum zweiten Sicherheitsarm (120) schwenkt und ihr Eingriffsmerkmal (132) mit dem zweiten komplementären Eingriffsmerkmal (230) in Eingriff kommt.

8. Landwirtschaftliches Fahrzeug (10), umfassend eine Streuvorrichtung (74) und einen Rahmen (100) nach einem der vorstehenden Ansprüche.

## Revendications

1. Cadre (100) permettant de supporter de manière mobile un dispositif épandeur (74) à l'arrière d'un véhicule agricole (10), le cadre (100) comprenant :
deux bras latéraux (110) conçus pour supporter le dispositif épandeur (74) entre eux ;
deux liaisons de pivot (115), agencées au niveau de bras respectifs des deux bras latéraux (110) et conçues pour relier de manière pivotante le cadre (100) à l'extrémité arrière du véhicule agricole (10) ;
au moins un premier bras de sécurité (120), s'étendant à partir d'un premier des bras latéraux (110) ; et
un loquet de sécurité allongé (130), relié de manière pivotante au premier bras de sécurité (120), et comprenant une caractéristique de mise en prise (132) qui est conçue pour venir en prise avec une caractéristique de mise en prise complémentaire (230) s'étendant latéralement à partir de l'extrémité arrière du véhicule agricole (10) pour bloquer temporairement le cadre (100) de pivoter par rapport à l'extrémité arrière du véhicule agricole (10) dans au moins une direction de pivotement, le cadre (100) étant **caractérisé en ce que** le loquet de sécurité allongé (130) comprend en outre un bord de contact (133) qui est agencé pour entrer en contact coulissant avec l'élément de mise en prise complémentaire (230) pendant une partie d'un mouvement de pivotement vers le haut du cadre (100), dans lequel le contact coulissant fait pivoter le loquet de sécurité allongé (130) par rapport au premier bras de sécurité (120) et l'élément de mise en prise (132) vient en prise avec la caractéristique de mise en prise complémentaire (230).

2. Cadre (100) selon la revendication 1, dans lequel le loquet de sécurité allongé (130) est relié de manière pivotante au premier bras de sécurité (120) au niveau d'une première extrémité du loquet de sécurité allongé (130).

3. Cadre (100) selon la revendication 1 ou 2, dans lequel la caractéristique de mise en prise (132) du loquet de sécurité allongé (130) est fournie au niveau d'une extrémité libre du loquet de sécurité allongé (130).

4. Cadre (100) selon l'une quelconque des revendications 1 à 3, comprenant en outre un curseur (140), accouplé au loquet de sécurité allongé (130) pour tourner avec celui-ci, et dans lequel le bras de sécurité (120) comprend un indicateur (150), agencé par rapport au curseur (140) de telle sorte que :
le curseur (140) pointe vers une première région (151) de l'indicateur (150) lorsque l'élément de mise en prise (132) du loquet de sécurité allongé (130) vient en prise avec l'élément de mise en prise complémentaire (230) s'étendant à partir de l'extrémité arrière du véhicule agricole (10) ; et
le curseur (140) pointe vers une seconde région (152) de l'indicateur (150), distincte de la première région (151), lorsque l'élément de mise en prise (132) du loquet de sécurité allongé (130) ne vient pas en prise avec la caractéristique de mise en prise complémentaire (230) s'étendant à partir de l'extrémité arrière du véhicule agricole (10).

5. Cadre (100) selon la revendication 4, dans lequel l'indicateur (150) est agencé en outre par rapport au curseur (140) de telle sorte que, lorsque le cadre (100) pivote vers le haut :
le curseur (140) pointe vers la deuxième région (152), avant que l'élément de mise en prise (132) du loquet de sécurité allongé (130) ne vienne en prise avec l'élément de mise en prise complémentaire (230) s'étendant à partir de l'extrémité arrière du véhicule agricole (10) ; et
le curseur (140) pointe vers une troisième région (153), distincte des première et deuxième régions (152), après que l'élément de mise en prise (132) du loquet de sécurité allongé (130) s'est désolidarisé de l'élément de mise en prise complémentaire (230) s'étendant à partir de l'extrémité arrière du véhicule agricole (10).

6. Cadre (100) selon la revendication 4 ou 5, dans lequel le loquet de sécurité allongé (130) et le curseur (140) sont situés sur des faces opposées du premier bras de sécurité (120) et reliés entre eux par l'intermédiaire d'un axe pivotant s'étendant à travers le premier bras de sécurité (120).

7. Cadre (100) selon l'une quelconque des revendications précédentes, comprenant en outre :
un second bras de sécurité (120), s'étendant à partir d'un second des bras latéraux (110) ; et
un second loquet de sécurité allongé (130), relié de manière pivotante au second bras de sécurité (120), et comprenant une caractéristique de mise en prise (132), conçue pour venir en prise avec une seconde caractéristique de mise en prise complémentaire (230) s'étendant latéralement à partir de l'extrémité arrière du véhicule agricole (10) pour bloquer temporairement le cadre (100) de pivoter par rapport à l'extrémité arrière du véhicule agricole (10) dans l'au moins une direction de pivotement, le second loquet de sécurité allongé (130) comprenant en outre un bord de contact (133) qui est agencé pour entrer en contact coulissant avec la seconde caractéristique de mise en prise complémentaire (230) pendant une partie d'un mouvement de pivotement vers le haut du cadre (100), dans lequel ce contact coulissant fait pivoter le second loquet de sécurité allongé (130) par rapport au second bras de sécurité (120) et sa caractéristique de mise en prise (132) vient en prise avec la seconde caractéristique de mise en prise complémentaire (230).

8. Véhicule agricole (10) comprenant un dispositif épandeur (74) et un cadre (100) selon l'une quelconque des revendications précédentes.
